# EUROPEAN PATENT SPECIFICATION

(11) **EP 1 207 996 B1**
(45) Date of publication and mention of the grant of the patent: **10.12.2003**
(21) Application number: 00954904.9
(22) Date of filing: 22.08.2000
(51) Int. Cl.: B29C 70/08, A43B 23/16

(54) **A PROCESS FOR MANUFACTURING PRODUCTS IN WHICH RIGID AND SOFT PARTS ARE COMBINED**
VERFAHREN ZUR HERSTELLUNG VON PRODUKTEN IN WELCHEN STEIFE UND WEICHE TEILE KOMBINIERT WERDEN
PROCEDE DE FABRICATION DE PRODUITS COMBINANT DES PARTIES SOUPLES ET DES PARTIES RIGIDES

(30) Priority: 31.08.1999 IT MO990177
(43) Date of publication of application: 29.05.2002
(73) Proprietor: Mestdagh, Alain, 41100 Modena (CH)
(72) Inventor: Mestdagh, Alain, 41100 Modena (CH)
(74) Representative: Gotra, Stefano
(86) International application number: IT0000345
(87) International publication number: WO01015886

(56) References cited:
- US-A- 3 837 026

## Description

The invention relates to a process for manufacturing products in which there are combinations of rigid and soft parts.

The invention has many possible applications. In particular, though not exclusively, it can be used in the production of clothing and footwear and accessories.

In the case, for example, of special shoes or boots for motorcyclists, the prior art includes the application of "hard" inserts, i.e. especially, resistant, which stiffen the shoe structure; these inserts are usually made of leather. The application of such inserts, which have a protective function, is laborious because it requires constant use of manual labour.

Furthermore, manufacturing realities dictate that it is not always possible to make the shapes and combinations of inserts which would be most suitable for optimum finished product performance.

The main aim of the present invention is to obviate the limitations and drawbacks in the prior art as disclosed in US-A-3 837 026 and the preamble of claim 1.

An advantage of the invention is its substantial simplicity of application. These aims and advantages and more besides are all attained by the present invention, as it is characterised in the appended claims.

Further characteristics and advantages of the invention will better emerge from the detailed description that follows of some preferred but non-exclusive embodiments, illustrated purely by way of non-limiting example in the accompanying figures of the drawings, in which:
figure 1 schematically shows, in section, the arrangement of the various parts which make up the coupling of the invention, in a first embodiment thereof;
figure 2 schematically shows, in section, the arrangement of the various parts which make up the coupling of the invention, in a further embodiment thereof;
figures 3 and 4 schematically shows, in section, the arrangement of the various parts which make up the coupling of the invention, in a further embodiment thereof, actuated in two stages;
figure 5 schematically shows a boot made according to the invention.

With reference to the figures of the drawings, the process for manufacturing products which involves a combination of rigid, semi-rigid and soft parts comprises a hot-coupling of at least one layer or sheet 3 of a polyester-based polyurethane elastomer between at least a portion of a first, resin-impregnated material 1, destined, after treatment, to constitute the more rigid part, and at least a portion of a second material 2, destined to constitute the less rigid or soft part.

The first material 1 is made of fibres impregnated with resins, which after special treatment give a stable shape and good mechanical characteristics to the whole.

The fibres of both the above-mentioned materials 1 and 2 can be carbon-fibres, kevlar, glass, aramide, and the like.

In a first embodiment of the invention the hot-coupling is done in a single stage at the same time as the treatment by which the first material 1 reaches its final stiffness by action of the resins, usually epoxy, which are impregnated in the material 1 itself.

In order,for the first material 1 to reach its final shape during this single-stage operation, the side of the first material 1 which is opposite the side in contact with at least a portion of the second material 2 (the contact being achieved by means of the sheet of polyester-based polyurethane elastomer) is placed and held in contact with the surface of a die 4.

In a variation of the process, at least a layer or sheet of the polyester-based polyurethane elastomer 3 is placed on the side of the first material 1 which is opposite the side thereof in contact with the second material 2 (and, as mentioned above, contacting the second material 2 by means of a sheet of polyester-based polyurethane elastomer 3).

In this case too, the permanent shape is achieved by arranging and clamping an external surface of the sheet of polyester-based polyurethane elastomer 3 arranged on a side of the first material 1 opposite the side of the first material 1 at which the first material 1 is placed in contact through a sheet of polyester-based polyurethane elastomer 3 with at least a portion of a second material 2, against a surface of a die 4.

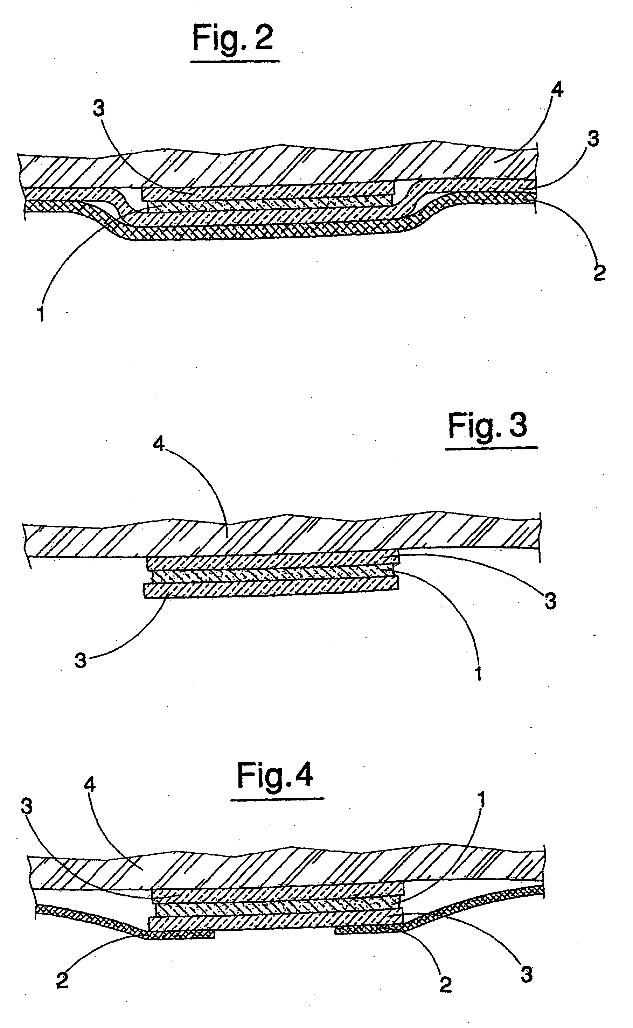

In a further embodiment of the invention, illustrated in figures 3 and 4, the hot-coupling is realised in at least two stages: a first stage in which, on at least one side of the first material 1 at least one sheet of polyester-based polyurethane elastomer 3 is heat-applied simultaneously with the effecting of the treatment giving the first material 1 its final rigidity; and a second stage in which at least a portion of the second material 2 is heat-coupled on at least a portion of the side of the first material 1 which the polyester-based polyurethane elastomer 3 has previously been applied on.

In all of the illustrated embodiments the portions of the second material 2 not coupled with portions of the first material 1 can be solidly coupled with a sheet of the polyester-based polyurethane elastomer 3 in order to conserve their characteristic of softness.

The products obtained are characterised by being thin in consideration of their other dimensions, while guaranteeing very considerable resistance qualities. The invention enables variously-structured materials to be achieved (with reinforced high-resistance stiffer or softer parts) as well as articles of clothing of various types (including shoes and boots) of great and versatile functionality.

In particular, the invention can be usefully employed for manufacturing clothes and footwear for sporting use.

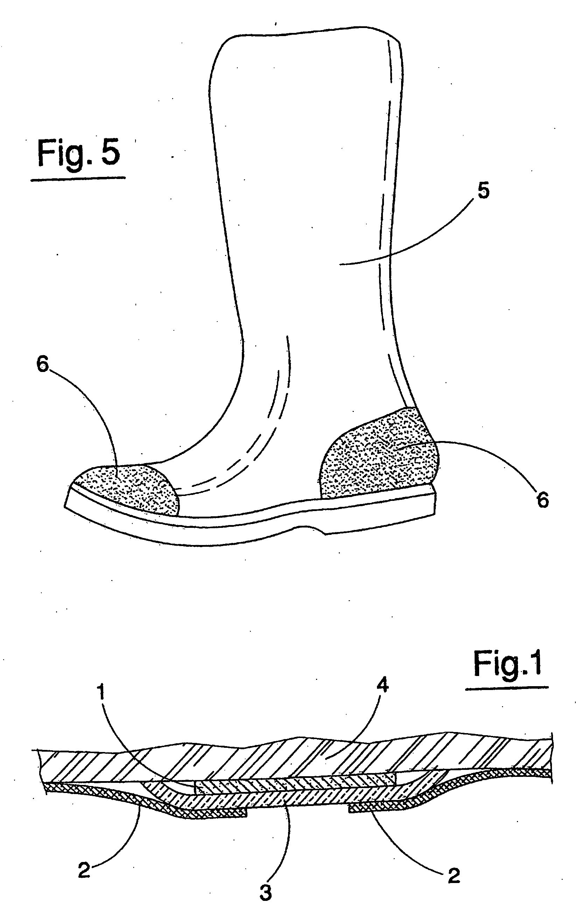

Figure 5 shows a boot made according to the invention in which 5 denotes the soft part made using the second material 2, possibly coupled with a sheet of elastomer 3, while 6 indicates two stiffer parts (in the illustrated example, heel and toe), made by using portions of the first material 1 coupled with a sheet of elastomer 3 as illustrated in figures 1,2 or 4.

It should be noted that whatever the adopted design, the sheet of elastomer 3 could be arranged such as to keep the first material 1 and the second material 2 completely separate one from the other, especially during the process itself.

## Claims

1. A process for manufacturing products in which more rigid parts of the products are alternated with less rigid parts thereof, **characterized in** a hot-single stage coupling of at least one sheet of a polyester-based polyurethane elastomer sheet (3) between at least one portion of a resin-impregnated first material (1), destined, subsequent to a treatment, to constitute a more rigid part of the product, and at least a portion of a second material (2), destined to constitute a less rigid part of the product wherein in the single stage, during the hot-coupling a treatment of the first material (1) is carried out, by means of which treatment the first material (1) acquires a final rigidity.

2. The process of claim 1, wherein in the single stage during which the hot-coupling and the treatment are simultaneously carried out, a side of the first material (1) which is opposite a side at which the first material (1) is placed in contact, through the polyester-based polyurethane elastomer sheet (3), with at least a portion of the second material (2), is arranged in contact with a surface of a die (4).

3. The process of claim 1, wherein on a side of the first material (1) which is opposite to a side thereof which is in contact, through the polyester-based polyurethane sheet (3), with at least a portion of a second material (2), at least a sheet of the polyester-based polyurethane sheet (3) is contactingly arranged.

4. The process of claim 3, wherein during the single stage, in which the hot-coupling and the treatment are simultaneously carried out, an external side of the at least one polyester-based polyurethane elastomer sheet (3) arranged on a side of the first material (1) which is opposite the side of the sheet (3) in contact with the first material (1), through a. polyester-based polyurethane elastomer sheet (3), with at least a portion of a second material (2), is arranged contactingly with a surface of a die (4).

5. The process of claim 1, wherein the hot-coupling is carried out in at least two stages: a first stage in which on at least one side of the first material (1) at least one polyester-based polyurethane elastomer sheet (3) is hot-applied, simultaneously with a treatment in which the first material (1) acquires final rigidity characteristics; and a second stage in which at least a portion of the second material (2) is hot-coupled to at least one portion of a side of the first material (1), on which a polyester-based polyurethane elastomer sheet (3) has previously been applied.

6. The process of any one of the preceding claims, wherein the first material (1) is constituted by fibres impregnated with resins, which resins, when subjected to a correct treatment, give a stable shape and high mechanical characteristics to the first material (1).

## Patentansprüche

1. Verfahren zur Herstellung von Produkten, bei welchen steifere Teile der Produkte mit weicheren Teilen derselben abgewechselt werden, **dadurch gekennzeichnet, dass** es eine Heissverbindung in einer einzigen Phase von wenigstens einer auf Polyester basierenden Polyurethan-Elastomer-Lage (3) vorsieht, und zwar zwischen wenigstens einem Teil eines mit Harzen imprägnierten ersten Materials (1), dazu bestimmt, nach einer Behandlung den steiferen Teil des Produktes zu bilden, und wenigstens einem Teil eines zweiten Materials (2), dazu bestimmt, den weicheren Teil des Produktes zu bilden, wobei in der einzigen Phase während der Heissverbindung eine Behandlung des ersten Materials (1) ausgeführt wird, mit Hilfe welcher Behandlung dem ersten Material (1) seine endgültige Steifheit verliehen wird.

2. Verfahren nach Patentanspruch 1, bei dem in der einzigen Phase, während welcher die Heissverbindung und die Behandlung gleichzeitig ausgeführt werden, eine Seite des ersten Materials (1), entgegengesetzt von einer Seite, auf welcher das erste Material (1) durch die auf Polyester basierende Polyurethan-Elastomer-Lage (3) mit wenigstens einem Teil des zweiten Materials (2) in Berührung ist, im Kontakt mit einer Fläche einer Form (4) angeordnet ist.

3. Verfahren nach Patentanspruch 1, bei welchem auf einer Seite des ersten Materials (1), entgegengesetzt von einer Seite desselben, welche sich durch die auf Polyester basierende Polyurethan-Elastomer-Lage (3) mit wenigstens einem Teil des zweiten Materials (2) in Berührung befindet, wenigstens eine auf Polyester basierende Polyurethan-Lage (3) im Kontakt angeordnet ist.

4. Verfahren nach Patentanspruch 3, bei welchem während der einzigen Phase, in welcher die Heissverbindung und die Behandlung gleichzeitig ausgeführt werden, eine äussere Seite der wenigstens einen auf Polyester basierenden Polyurethan-Elastomer-Lage (3), angeordnet auf einer Seite des ersten Materials (1), die sich entgegengesetzt von der Seite der Lage (3) befindet, auf welcher das erste Material (1) durch eine auf Polyester basierende Polyurethan-Elastomer-Lage (3) mit wenigstens einem Teil eines zweiten Materials (2) im Kontakt ist, im Kontakt mit einer Fläche einer Form (4) angeordnet ist.

5. Verfahren nach Patentanspruch 1, bei welchem die Heissverbindung in wenigstens zwei Phasen ausgeführt wird: eine erste Phase, in welcher auf wenigstens einer Seite des ersten Materials (1) wenigstens eine auf Polyester basierende Polyurethan-Elastomer-Lage (3) durch Heissverbindung angebracht wird, und zwar gleichzeitig mit einer Behandlung, durch welche dem ersten Material (1) seine endgültigen steifen Eigenschaften verliehen werden; und eine zweite Phase, in welcher wenigstens ein Teil des zweiten Materials (2) mit wenigstens einem Teil von einer Seite des ersten Materials ( 1 ) verbunden wird, an welcher vorher eine auf Polyester basierende Polyurethan-Elastomer-Lage (3) angebracht worden ist.

6. Verfahren nach einem beliebigen der vorstehenden Patentansprüche, bei welchem das erste Material (1) aus mit Harzen imprägnierten Fasern gebildet ist, welche Fasern, wenn sie einer korrekten Behandlung unterzogen sind, dem ersten Material (1) eine stabile Form und hohe mechanische Eigenschaften verleihen.

## Revendications

1. Un procédé de fabrication de produits dans lesquels sont alternées des parties plus rigides et des parties moins rigides, **caractérisé par** un accouplement à chaud en une seule phase d'au moins une feuille d'un élastomère de polyuréthanne à base polyester (3) entre au moins une portion d'un premier tissu imprégné de résine (1), destiné, après le traitement, à constituer une partie plus rigide du produit, et au moins une portion d'un second tissu (2), destiné à constituer une partie moins rigide du produit, dans lequel au cours de la phase unique, pendant l'accouplement à chaud est réalisé un traitement du premier tissu (1), au moyen duquel le premier tissu (1) acquiert une rigidité finale.

2. Le procédé de la revendication 1, dans lequel au cours de la phase unique pendant laquelle sont réalisés dans le même temps l'accouplement à chaud et le traitement, un côté du premier tissu (1) qui est opposé au côté mis en contact, par l'intermédiaire de la feuille d'élastomère de polyuréthanne à base polyester (3), avec au moins une portion du second tissu (2), est mis en contact avec une surface d'un moule (24).

3. Le procédé de la revendication 1, dans lequel sur un côté du premier tissu (1) qui est opposé au côté mis en contact, par l'intermédiaire de la feuille d'élastomère de polyuréthanne à base polyester (3), avec au moins une portion d'un second tissu (2), est disposé en contact au moins une feuille d'élastomère de polyuréthanne à base polyester (3).

4. Le procédé de la revendication 3, dans lequel au cours de la phase unique pendant laquelle sont réalisés dans le même temps l'accouplement à chaud et le traitement, un côté externe de la feuille d'élastomère de polyuréthanne à base polyester (3) disposé sur un côté du premier tissu (1) opposé au côté de la feuille (3) en contact avec le premier tissu (1), par l'intermédiaire d'une feuille d'élastomère de polyuréthanne à base polyester (3), avec au moins une portion d'un second tissu (2), est disposé en contact avec une surface d'un moule (4).

5. Le procédé de la revendication 1, dans lequel l'accouplement à chaud est réalisé en au moins deux phases: une première phase dans laquelle sur au moins un côté du premier tissu (1) est appliquée à chaud au moins une feuille d'élastomère de polyuréthanne à base polyester (3), simultanément à un traitement au cours duquel le premier tissu (1) acquiert les caractéristiques de dureté finale; et une seconde phase dans laquelle au moins une portion du second tissu (2) est appliquée à chaud sur au moins une portion d'un côté du premier tissu (1), sur lequel une feuille d'élastomère de polyuréthanne à base polyester (3) à été auparavant appliquée.

6. Le procédé de n'importe laquelle des revendications précédentes, dans lequel le premier tissu (1) est constitué de fibres imprégnées de résines, lesquelles, lorsqu'elles sont sujettes à un traitement correct, donnent une forme stable et de bonnes caractéristiques mécaniques au premier tissu (1).
